# EUROPÄISCHE PATENTSCHRIFT

(11) **EP 0 710 051 B1**
(45) Veröffentlichungstag und Bekanntmachung des Hinweises auf die Patenterteilung: **01.03.2000**
(21) Anmeldenummer: 95116638.8
(22) Anmeldetag: 23.10.1995
(51) Int. Cl.: H05B 39/08, G05F 1/455, H02J 3/14

(54) **Schaltungsanordnung und Verfahren zum Betreiben parallel geschalteter Leistungssteller**
Circuit and method for operating power controller in parallel
Circuit et méthode pour mettre en service des contrôleurs de puissance connectés en parallèle

(30) Priorität: 24.10.1994 DE 4437966
(43) Veröffentlichungstag der Anmeldung: 01.05.1996
(73) Patentinhaber: AEG SVS Power Supply Systems GmbH, 59581 Warstein-Belecke (DE)
(72) Erfinder: Vollmar, Wilfried, Ing., D-59494 Soest (DE)
(74) Vertreter: Fritz, Edmund Lothar, Dipl.-Chem.

(56) Entgegenhaltungen:
- EP-A- 0 225 657

## Beschreibung

Die Erfindung betrifft zum einen ein Verfahren zum Betreiben parallel geschalteter Leistungssteller mittels Steuerung der Leistung über zeitlich innerhalb einer Taktperiode auftretende, jeweils mehrere Vollperioden aufweisende Schwingungspakete mit jeweils einer steigenden und einer fallenden Flanke und zum andern eine Schaltungsanordnung zu seiner Durchführung.

Ein derartiges Verfahren ist aus der DE 43 09 031 A1 bekannt. Die Leistungssteller werden periodisch (in "Taktperioden") derart zur Abgabe von Leistung angesteuert, daß während eines Zeitschlitzes mehrere Vollschwingungen eines Laststromes, sogenannte Schwingungspakete, an die angeschlossenen Verbrauchergeräte gelangen. Häufig ist die von den Leistungsstellern an die Verbrauchergeräte abzugebende Leistung Schwankungen unterworfen und bei variabler Last nicht eindeutig im voraus bestimmbar. Die Zeitspanne vom Beginn der Taktperiode bis zum Beginn des Ansteuerns des betreffenden Leistungsstellers (also bis zum Beginn des Schwingungspakets) wird Verzögerungszeit genannt. Durch Variation der Verzögerungszeit zum Zwecke einer Verteilung der Schwingungspakete auf die gesamte Taktperiode lassen sich starke Schwankungen des Netzstromes durch die von den Verbrauchergeräten aufgenommenen Ströme reduzieren.

Die Variation der Verzögerungszeiten hat keinen Einfluß auf die an die Verbrauchergeräte abgegebene Leistung, weil diese abhängig ist von der Stromamplitude und der Breite der Schwingungspakete, nicht jedoch von der Lage der Schwingungspakete innerhalb der Taktperiode.

Bei dem bekannten Verfahren wird die Verzögerungszeit jedes Leistungsstellers in Abhängigkeit von der Einschaltzeit und der Stromamplitude sämtlicher Leistungssteller derart eingestellt, daß innerhalb einer Taktperiode der Effektivwert des Netzstromes minimiert wird. Eine solche Ansteuerung der Leistungssteller verlangt den Einsatz eines Personnal Computers, dessen Bussystem durch die ständige Anpassung der Verzögerungszeiten extrem stark belastet ist.

Andere Aufgaben (Sollwertvergabe, Istwertabfrage über Datenschnittstellen) können wegen der Überlastung des Bussystems vielfach nur zeitverzögert in den Ablauf eingefügt werden.

Bei einer Steuerung der Verbraucherleistung mit Schwingungspaketen tritt das Problem auf, daß diese unter Umständen Netzspannungseinbrüche verursachen. Diese Netzspannungseinbrüche wiederum rufen in Beleuchtungseinrichtungen Lichtstärkeschwankungen hervor, sogenannte Flicker-Erscheinungen.

Der Erfindung liegt die Aufgabe zugrunde, ein Verfahren zum Betreiben parallel geschalteter Leistungssteller mit frei veränderbarer Leistung verfügbar zu machen, das Netzspannungseinbrüche weitgehend verhindert und ohne den Einsatz eines Personal Computers ausgeführt werden kann, und eine Schaltungsanordnung zur Durchführung des Verfahrens zu schaffen.

Diese Aufgabe wird erfindungsgemäß dardurch gelöst., daß die steigende Flanke des Schwingungspaketes desjenigen Leistungsstellers, der bei seinem Einschalten die größte Stromamplitude des gesamten Laststromes aller Leistungssteller hervorruft, schrittweise von Taktperiode (T₀) zu Taktperiode (T₀) um jeweils mindestens eine Netzperiode in Richtung der zeitlich nächstliegenden fallenden Flanke eines anderen Schwingungspaketes so lange verschoben wird, bis erstmalig zumindestens eine der beiden folgenden Bedingungen erfüllt ist:
- der in einer Taktperiode (T₀) auftretende Effektivwert des gesamten Laststroms aller Leistungssteller würde bei weiterem Verschieben in dieser Richtung ansteigen oder
- die steigende Flanke des verschobenen Schwingungspakets tritt zum gleichen Zeitpunkt auf wie die fallende Flanke des anderen Schwingungspaketes, und dadurch
- daß in Reihe zu jedem Leistungssteller ein erster Stromwandler mit einem ersten ohmsehen Widerstand im Sekundärkreis liegt, daß jeder Leistungssteller über einem Mikrocomputer angesteuert wird, daß einem dem Gesamtstrom aller Leistungssteller proportionaler Strom über einen zweiten ohmschen Widerstand geleitet wird und daß die an beiden Widerständen anliegenden Spannungen von dem Mikrocomputer abgefragt werden.

Vorteilhaft bei dem Verfahren ist die Reduzierung des in der Taktperiode auftredenden Effektivwertes des dem Netz entnommenen Gesamtstromes (für alle an die Leistungssteller angeschlossenen Verbraucher), ohne daß dazu ein (hochbelastetes) Bus-System eines Personal Comuters eingesetzt werden müßte. Dieser Effektivwert entspricht dem über eine Taktperiode gebildeten Integral aus dem Quadrat des gesamten Laststroms, wobei dieses Integral durch die Dauer der Taktperiode dividiert wird (dieser Effektivwert wird also unabhängig von der Dauer einer Netzperiode gebildet).

Durch die schrittweise Veränderung (Verkürzung oder Verlängerung) der Verzögerungszeit desjenigen Leistungsstellers, der mit seinem Zuschalten ein Strommaximum hervorruft, wird eine sprunghafte Veränderung der an das angeschlossene Verbrauchergerät abgegebenen Leistung vermieden.

Grundsätzlich kann ein zusammenhängendes Schwingungspaket über die Begrenzung einer Taktperiode hinausragen. Die Lage der Taktperiode auf dem Zeitstrahl ist frei wählbar.

Beim Verschieben einer steigenden Flanke eines Schwingungspaketes ist es günstig, die Flanke schrittweise zeitlich um eine einzige Netzperiode pro Taktperiode zu verschieben.

Die Schaltungsanordung zur Durchführung des Verfahrens erzeugt zum einen - für jeden Leistungssteller getrennt - eine dem Strom durch den Leistungssteller proportionale Spannung und zum andern eine dem Gesamtstrom der Leistungssteller proportionale Spannung. Diese Spannungen werden von den Mikrocomputern der Leistungssteller abgefragt. Aufgrund dieser abgefragten Werte ist eine gezielte Ansteuerung der Leistungssteller zur Durchführung des erfindungsgemäßen Verfahrens möglich.

Im folgenden werden drei Ausführungsbeispiele der Erfindung anhand von fünf Zeichnungen, aus denen sich weitere Einzelheiten und Vorteile ergeben, näher beschrieben.

Es zeigen:
- Fig. 1: Schwingungspakete vierer Leistungssteller,
- Fig. 2: denkbare Verteillungen der Schwingungspakete innerhalb einer Taktperiode,
- Fig. 3: eine Schaltungsanordnung mit Summenstromwandler,
- Fig. 4: eine Abwandlung der Schaltungsanordnung mit einem netzseitigen Stromwandler und
- Fig. 5: eine Abwandlung der Schaltungsanordnung mit Ausnutzung der Stromausgänge an den Leistungsstellern.

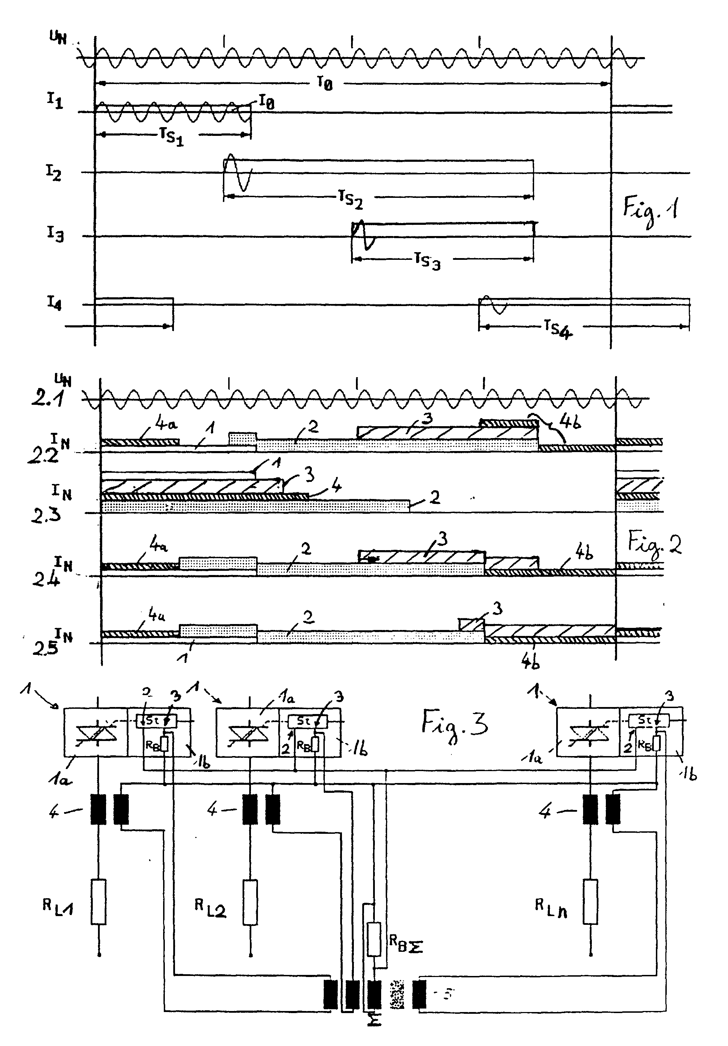

In Fig. 1 ist oben der Verlauf der Netzspannung U_{N} zu sehen, die vier parallel geschaltete Leistungssteller versorgt. An die Leistungssteller ist jeweils eine Last (ein oder mehrere Verbrauchergeräte) angeschlossen. Die Lasten werden mit unterschiedlicher Leistung versorgt und zwar mittels einer Schwingungspaketsteuerung. Dabei werden in Abhängigkeit von der benötigten Leistung (der Lasten) die vier Leistungssteller derart periodisch angesteuert, daß mehrere Vollperioden der Laströme I₁, I₂, I₃ und I₄ zu den angeschlossenen Verbrauchergeräten gelangen.

Zusammenhängende Vollperioden bilden jeweils ein Schwingungspaket. Jedes Schwingungspaket ist in Fig. 1 durch ein Rechteck dargestellt, dessen Höhe dem Effektivwert des jeweiligen Stromes während der Dauer des Stromflusses durch den jeiweiligen Leistungssteller entspricht. Die in einer Taktperiode T₀ auftretenden Schwingungspakete der durch die Leistungssteller fließenden Lastströme Iₘ (mit m = 1, 2, 3, 4) sind in Fig. 1 dargestellt. Die Breite der Schwingungspakete wird durch die Einschaltzeit T_{Sn} (mit n = 1, 2, 3, 4) der Leistungssteller festgelegt. Die Schwingungspakete sind innerhalb der dargestellten Taktperiode T₀ zeitlich versetzt angeordnet und haben unterschiedliche Breiten.

Fig. 2 zeigt unter 2.1 zunächst wiederum den Verlauf der Netzspannung U_{N} innerhalb der Taktperiode T₀ und unter 2.2 die Überlagerung der vier Schwingungspakete aus Fig. 1. Diese Überlagerung ergibt den gesamten Laststrom I_{N}, der zur Versorgung aller angeschlossenen Verbraucher dem Netz entzogen wird. Das Schwingungspaket, das von dem Strom I₄ gemäß Fig. 1 erzeugt wird und eine Breite von T_{S4} auf der Zeitachse hat, geht über den rechten Rand der dargestellten Taktperiode T₀ hinaus. Gleichzeitig ragt dieses Schwingungspaket von der vorhergehenden Taktperiode in die dargestellte Taktperiode T₀ hinein. Dieses Schwingungspaket ist unter 2.2 innerhalb der Taktperiode T₀ durch zwei Bereiche dargestellt. Der eine Bereich 4a berührt den linken Rand der Taktperiode T₀ und der andere Bereich 4b den rechten Rand.

Diese beiden Bereiche gehören aus physikalischer Sicht zu zwei verschiedenen, nacheinander auftretenden Schwingungspaketen desselben Stromes I₄.

Wegen der periodischen Erzeugung der Schwingungspakete (in den Taktperioden T₀) können die beiden Bereiche 4a und 4b zur Erläuterung des erfindungsgemäßen Verfahrens als ein einziges Schwingungspaket aufgefaßt werden. Hierbei verdient Beachtung, daß beim Verschieben der aufsteigenden Flanke des Bereichs 4b in der nächsten Taktperiode T₀ auch der Bereich 4a verschoben wird. Die beiden Bereiche 4a und 4b gehören also zusammen.

Da die aufsteigende Flanke des Bereiches 4b des Schwingungspaketes 4 ein Maximum des gesamten Laststromes in der Taktperiode T₀ hervorruft, wird die aufsteigende Flanke dieses Schwingungspaketes 4b in Richtung der (zeitlich) nächstliegenden fallenden Flanke eines anderen Schwingungspaketes verschoben, im dargestellten Falle also nach rechts in Richtung der fallenden Flanke des Schwingungspaketes 3 bzw. des Schwingungspaketes 2. Gleichzeitig verschiebt sich der Bereich 4a des Schwingungspaketes 4 (schrittweise von Taktperiode T₀ zu Taktperiode T₀) nach rechts, und zwar bis die steigende Flanke des Bereichs 4b mit der fallenden Flanke der (gleichzeitig endenden) Schwingungspakete 2 und 3 zusammenfällt. Dann hat sich der Bereich 4a so weit nach rechts verschoben, daß er teilweise die Schwingungspakete 1 und 2 überlagert. Die Höhe dieser Überlagerung aus den Schwingungspaketen 1 und 2 und dem Bereich 4a ist allerdings kleiner als eine Überlagerung der Schwingungspakete 2 und 3 und des Bereiches 4b (vgl. Fig. 2.2). Am Ende der Verschiebung ist also der Effektivwert des gesamten Laststromes I_{N} in der Taktperiode T₀ kleiner als zu Beginn der Verschiebung. Dieser Beginn der Verschiebung ist in 2.2 dargestellt.

Die Lage der Taktperiode T₀ auf der Zeitachse ist frei wählbar, die Breite der Taktperiode T₀ ist durch die Dauer einer Periode festgelegt. Der Effektivwert des gesamten Laststromes I_{N} unter 2.2 beträgt 2.38 A.

Unter 2.3 ist der ungünstigste Fall bezüglich der Netzspannungseinbrüche zu sehen, nämlich der Fall, daß alle vier Leistungssteller gleichzeitig - im dargestellten Bespiel zu Beginn der Taktperiode T₀ - angesteuert werden, so daß alle vier Schwingungspakete aus Fig. 1 "übereinander gestapelt" sind.

Es ergibt sich hierbei ein Effektivwert des gesamten Laststromes I_{N} (in einer Taktperiode T₀) von 3,09 A, dieser Wert ist größer als im zuvor geschilderten Fall, bei dem die Schwingungspakete verteilt über die Taktperiode T₀ angeordnet sind, weil bei der Bestimmung des Effektivwertes (aus der Wirkleistung) das Quadrat des tatsächlich fließenden Stromes berücksichtigt wird.

Unter 2.4 ist an einem weiteren Beispiel veranschaulicht, wie das Schwingungspaket des Leistungsstellers, der bei seinem Zuschalten einen Maximalwert der Amplitude des Gesamtstromes hervorruft, zur (auf der Zeitachse) nächstliegenden fallenden (Strom-)Flanke eines anderen Schwingungspaketes verschoben wird.
Diese Darstellung zeigt im Vergleich zu 2.2 und 2.3 eine andere Verteilung der Schwingungspakete, wobei die Breite und die Höhe der vier Schwingungspakete mit denen unter 2.2 und 2.3 identisch ist, lediglich ihre Lage auf der Zeitachse ist gegenüber den beiden vorgenannten Darstellungen verschieden.

Durch einen nach rechts gerichteten kleinen Pfeil ist veranschaulicht, daß die steigende Flanke des Schwigungspaketes 3 weitestmöglich zur zeitlich nächstliegenden fallenden Flanke eines anderen Schwingungspakets verschoben wird. Diese steigende Flanke ruft einen Maximalwert des Gesamtstromes aller Leistungssteller hervor, d. h. der erste Teil des Schwingungspaketes 3, der das Schwingungspaket 2 überlagert, überragt in der Taktperiode T₀ alle anderen - teilweise übereinander liegenden - Schwingungspakete. Damit ist für das Schwingungspaket 3 das Kriterium erfüllt, bei dem das Verschieben der steigenden Flanke einsetzt.

Das Verschieben geschieht nicht in einem einzigen Schritt bis zur nächsten Taktperiode, sondern es wird das Schwingungspaket von Taktperiode T₀ zu Taktperiode T₀ jeweils um eine Netzperiode in die gewünschte Richtung verschoben. Mit anderen Worten wird im dargestellten Falle die Verzögerungszeit für das Schwingungspaket 3 von Taktperiode T₀ zu Taktperiode T₀ verlängert.

In Fig. 2 ist unter 2.5 zu sehen, wie die Schwingungspakete nach Abschluß der Verschiebung des Schwingungspaketes 3 in der Taktperiode T₀ angeordnet sind. Das Schwingungspaket 3 ist nicht über das Ende der Taktperiode T₀ hinaus verschoben, da gleich im Anschluß an diese Taktperiode T₀ zwei steigende Flanken von zwei übereinaderliegenden Schwingungspaketen auftreten, nämlich von dem Schwingungspaket 1 und dem Bereich 4a des Schwingungspaketes 4.
Diese beiden Schwingungspakete 1 und 4 sind zusammen höher als das Schwingungspaket 2. Eine weitere Verschiebung des Schwingungspaketes 3 nach rechts würde deshalb den Effektivwert des gesamten Laststroms in der nächsten Taktperiode T₀ erhöhen. Aus diesem Grunde endet die Verschiebung mit der in 2.5 dargestellten Verteilung der Schwingungspakete 1, 2, 3 und 4 (bestehend aus den Bereichen 4a und 4b). In diesem Fall beträgt der Effektivwert des von allen vier Leistungsstellern verursachten gesamten Laststromes (I_{N}) nur noch 2,17 A. Wenn die noch übrigen Flanken des Netzstromes ausgeglichen wären (darstellbar durch eine waagerechte gerade Linie für den gesamten Laststrom I_{N}), ergäbe sich ein Effektivwert des gesamten Laststroms I_{N} von 2,15 A. Bei diesem Wert würde die von den vier Leistungsstellern abgegebene Leistung einen Lststrome I_{N} konstanter Amplitude hervorrufen. Da die Verbrauchergeräte im vorliegenden Beispiel unterschiedliche Leistung (mit unterschiedlicher Amplitude des Laststroms) benötigen, ist dieser Wert bei den hier gegebenen Verhältnissen nicht erzielbar.

Fig. 3 zeigt einen Schaltplan mit n parallel geschalteten Thyristorstellern 1, die jeweils ein eigenes Verbrauchergerät, jeweils dargestellt durch einen ohmschen Widerstand R_{Lm} (mit m = 1, 2 ... n), versorgen.
Die Thyristorsteller 1 weisen Thyristoren 1a auf, die ihre Zündimpulse von einem dem Thyristorsteller 1 zugeordneten Steuerteil 1b erhalten. Die steuerteile 1b sind mit einem Mikrocomputer St ausgerüstet, der zwei Eingänge 2 und 3 zur Erfassung von Spannungen aufweist. An jeden Thyristorsteller 1 ist ausgangsseitig ein erster Stromwandler 4 angeschlossen, dessen Primärwicklung in Reihe zum jeweiligen Widerstand R_{Lm} (mit m = 1, 2 ...n) liegt. Im Sekundärkreis des ersten Stromwandlers 4 liegt jeweils ein ohmscher Widerstand R_{B} und eine Primärwicklung eines zweiten Stromwandlers 5. Dieser zweite Stromwandlers 5 hat für jeden Thyristorsteller 1 eine eigene Primärwicklung, jedoch nur eine einzige Sekundärwicklung Σ.

Da die Primärwicklungen alle gleichsinnig von Strom durchflossen werden und die gleichen Windungszahlen haben, wird in der Sekundärwicklung Σ, die die gleiche Windungszahl hat wie jede der Primärwicklungen, die Summe aller Ströme erfaßt.
An der Sekundärwicklung Σ ist ein Widerstand R_{BΣ} angeschlossen, an dem eine der Summe aller durch die Thyristorsteller 1 fließenden Lastströme proportionale Spannung liegt. Diese Spannung ist über elektrische Verbindungen an jeden Mikrocomputer geführt, und zwar an den Eingang 2.

Auf diese Weise erfassen alle Mikrocomputer St den Gesamtstrom, der dem speisenden Netz entzogen wird.

Die an dem Widerstand R_{B} im Sekundärkreis des ersten Stromwandlers 4 liegende Spannung wird - für jeden Thyristorsteller getrennt - an den zweiten Eingang 3 des zugehörigen Mikrocomputers St geführt. Auf diese Weise wird der von dem jeweiligen Thyristorsteller 1 abgegebene Laststrom erfaßt.

Über die Mikrocomputer St werden die Breite der Schwingungspakete und die Zeitpunkte ihres Beginns gesteuert.
Mit Hilfe dieser Schaltungsanordnung und einer im Mikrocomputer gespeicherten Software ist es also möglich, das im Zusammenhang mit der Fig.2 erläuterte erfindungsgemäße Verfahren durchzuführen.

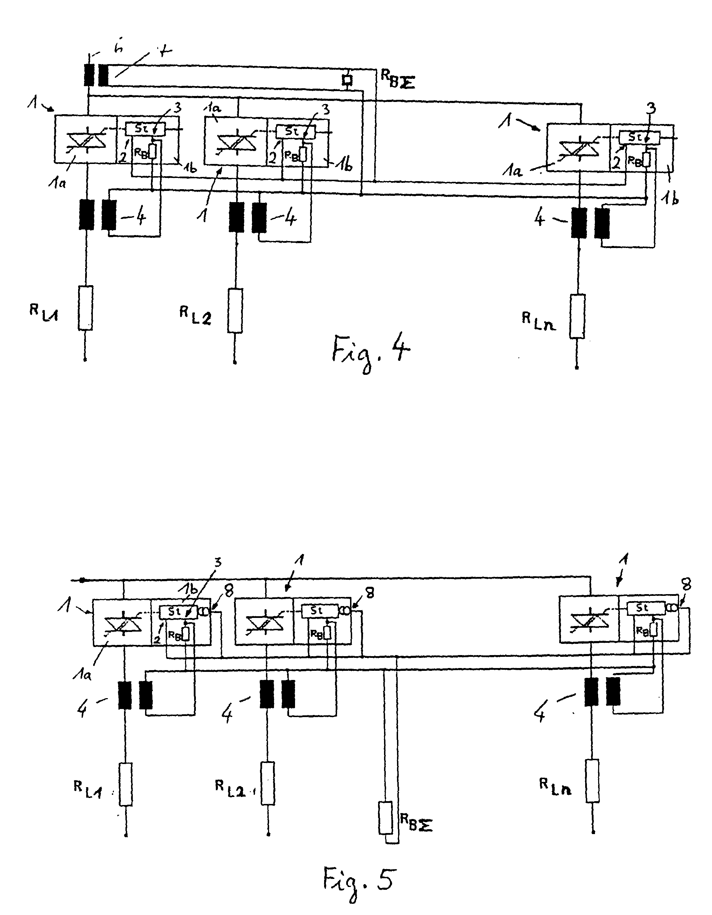

Eine Abwandlung der Schaltungsanordnung nach Fig. 3 ist in der Fig. 4 dargestellt. Diese Schaltungsanordnung läßt sich nur dann realisieren, wenn die netzseitige Stromzuleitung 6, über die alle Thyristorsteller 1 versorgt werden, zugänglich ist. In diesem Falle läßt sich in die Stromzuleitung 6 ein Stromwandler 7 einfügen, der sekundärseitig an einem Widerstand R_{BΣ} eine Spannung erzeugt, die dem Gesamtstrom ΣI proportional ist. Die Spannung an diesem Widerstand R_{BΣ} ist - wie die Spannung an dem Widerstand R_{BΣ} gemäß Fig. 3 - an den Eingang 2 des Mikrocomputers St geführt. Bei dieser Ausgestaltung entfällt der zweite Stromwandler 5 gemäß Fig. 3.

In Fig. 5 ist eine weitere Abwandlung der Schaltungsanordnung nach Fig. 3 dargestellt.

Bei dieser Ausführung werden an den Mikrocomputern St befindliche Stromausgänge 8 genutzt, um eine dem Gesamtstrom proportionale Spannung zu erzeugen. Dazu werden die Stromausgänge 8 aller Mikrocomputer St an einen (gemeinsamen) Widerstand R_{BΣ} gelegt.

Die Stromausgänge geben einen Strom ab, der proportional ist zu dem Effektivwert des von dem betreffenden Thyristorsteller abgegebenen Laststromes während der Einschaltzeiten der Thyristoren 1a.

Bis auf den Umstanf, daß der Gesamtstrom nicht mittels eines zweiten Stromwandlers 5 gemäß Fig. 3 erfaßt wird, gilt im übrigen das bereits im Zusammenhang mit der Fig. 3 Gesagte.

## Patentansprüche

1. Verfahren zum Betreiben parallel geschalteter Leistungssteller mittels Steuerung der Leistung über zeitlich innerhalb einer Taktperiode (T₀) auftretende, jeweils mehrere Vollperioden aufweisende Schwingungspakete (1, 2, 3, 4) mit jeweils einer steigenden und einer fallenden Flanke,
**dadurch gekennzeichnet,**
daß die steigende Flanke des Schwingungspaketes (3, 4) desjenigen Leistungsstellers, der bei seinem Einschalten die größte Stromamplitude des gesamten Laststromes (I_{N}) aller Leistungssteller hervorruft, schrittweise von Taktperiode (T₀) zu Taktperiode (T₀) um jeweils mindestens eine Netzperiode in Richtung der zeitlich nächstliegenden fallenden Flanke eines anderen Schwingungspaketes (2, 3) so lange verschoben wird, bis erstmalig zumindestens eine der beiden folgenden Bedingungen erfüllt ist:
- der in einer Taktperiode (T₀) auftretende Effektivwert des gesamten Laststroms (I_{N}) aller Leistungssteller würde bei weiterem Verschieben in dieser Richtung ansteigen oder
- die steigende Flanke des verschobenen Schwingungspakers (3, 4) tritt zum gleichen Zeitpunkt auf wie die fallende Flanke des anderen Schwingungspaketes (2,3).

2. Verfahren nach Anspruch 1,
dadurch gekennzeichnet,
daß die steigende Flanke schrittweise zeitlich um eine Netzperiode pro Taktperiode (T₀) verschoben wird.

3. Schaltungsanordnung zur Durchführung des Verfahrens nach Anspruch 1 oder 2,
**dadurch gekennzeichnet,**
daß in Reihe zu jedem Leistungssteller ein erster Stromwandler (4) mit einem ersten ohmschen Widerstand (R_{B}) im Sekundärkreis liegt, daß jeder Leistungssteller über einem Mikrocomputer (St) angesteuert wird, daß einem dem Gesamtstrom aller Leistungssteller proportionaler Strom über einen zweiten ohmschen Widerstand (R_{BΣ}) geleitet wird und daß die an beiden Widerständen (R_{B}, R_{BΣ}) anliegenden Spannungen von dem Mikrocomputer (St) abgefragt werden (Fig. 3).

4. Schaltungsanordnung nach Anspruch 3,
dadurch gekennzeichnet,
daß der zweite ohmsche Widerstand (R_{BΣ}) im Sekundärkreis eines zweiten Stromwandlers (5, 7) liegt (Fig. 3, Fig. 4).

5. Schaltungsanordnung nach Anspruch 4,
dadurch gekennzeichnet,
daß der zweite Stromwandler (7) primärseitig vom Gesamtstrom der parallelgeschalteten Leistungssteller durchflossen wird (Fig. 4).

6. Schaltungsanordnung nach Anspruch 3,
dadurch gekennzeichnet,
daß der zweite Stromwandler (5) für jeden Leistungssteller eine Primärwicklung hat, wobei alle diese Primärwicklungen den gleichen Wicklungssinn haben, daß der durch die Primärwicklungen fließende Strom jeweils mit einem Faktor proportional zu dem durch den jeweiligen Leistungssteller fließenden Strom ist und daß dieser Faktor bei allen Leistungsstellern gleich groß ist (Fig. 3).

7. Schaltungsanordnung nach Anspruch 6,
darduch gekennzeichnet,
daß die Primärwicklungen des zweiten Stromwandlers (5) in Reihe liegen zu der Sekundärwicklung des jeweiligen ersten Stromwandlers (4) (Fig. 3).

8. Schaltungsanordnung nach Anspruch 3,
dadurch gekennzeichnet,
daß jeder Leistungssteller während der Dauer der Schwingungspakete über einen Stromausgang (8) einen dem Effektivwert des gerade fließenden Laststromes poportionalen Strom abgibt und daß die Stromausgänge (8) aller Leistungssteller an den zweiten ohmschen Widerstand (R_{BΣ}) angeschlossen sind (Fig.5).

## Claims

1. Method of operating power controllers connected in parallel by controlling the power during stacks of oscillations (1, 2, 3, 4) having in each case a rising edge and a descending edge and occurring within a clock period (T₀) and comprising in each case several complete periods,
characterised in
that the rising edge of the stack of oscillations (3, 4) of that power controller which causes the largest current amplitude of the total load current (I_{N}) of all power controllers when being switched on is shifted step by step from clock period (T₀) to clock period (T₀) by a least one net period in the direction of the descending edge nearest in time of another stack of oscillations (2, 3) to such an extent until at least one of the following conditions is fulfilled for the first time:
- the effective value of the total load current (I_{N}) of all power controllers occurring within one clock period (T₀) would increase when shifting further in that direction, or
- the rising edge of the shifted stack of oscillations (3, 4) occurs at the same time as the descending edge of the other stack of oscillations (2, 3).

2. Method as claimed in claim 1,
characterised in
that the rising edge is shifted in time step by step by a net period per clock period (T₀).

3. Circuit for carrying out the method as claimed in claims 1 or 2,
characterised in
that a first current transformer (4) with a first ohmic resistor (R_{B}) is positioned in the secondary circuit in series with each power controller, that each power controller is triggered by a micro computer (St),
that a current which is proportional to the total current of all power controllers is conducted through a second ohmic resistor (R_{BΣ}) and that the voltages fed to the two resistors (R_{B} , R_{BΣ}) are scanned by the micro computer (St) (Fig. 3).

4. Circuit as claimed in claim 3
characterised in
that the second ohmic resistor (R_{BΣ}) is positioned in the secondary circuit of a second current transformer (5, 7) (Fig. 3, Fig. 4).

5. Circuit as claimed in claim 4,
characterised in
that the second current transformer (7) is passed on the primary side by the total current of the power controllers connected in parallel.

6. Circuit as claimed in claim 3,
characterised in
that the second current transformer (5) has a primary winding for each power controller, all these primary windings having the same winding direction, that the current flowing through the primary windings is proportional with one factor to the current flowing through the respective power controller, and that this factor has the same value for all power controllers (Fig. 3).

7. Circuit as claimed in claim 6,
characterised in
that the primary windings of the second current transformer (5) are positioned in series to the secondary winding of the respective first current transformer (4) (Fig. 3).

8. Circuit as claimed in claim 3,
characterised in
that each power controller delivers during the duration of the stacks of oscillations via a current output (8) a current which is proportional to the effective value of the presently flowing load current, and that the current outlets (8) of all power controllers are connected to the second ohmic resistor (R_{BΣ}) (Fig. 5).

## Revendications

1. Procédé pour la conduite de régulateurs de puissance connectés en parallèle qui fait appel à la régulation de la puissance par paquets d'oscillations (1, 2, 3, 4) qui débutent à l'intérieur d'une période de cadencement et, s'étendant sur plusieurs périodes complètes, présentent chacun un flanc ascendant et un flanc descendant,
caractérisé en ce que
le flanc ascendant du paquet d'oscillations (3, 4) de celui d'entre les régulateurs de puissance qui appelle, lorsqu'il est mis en circuit, l'intensité de la plus forte amplitude par rapport à la charge de courant totale (I_{N}), est décalé pas à pas sur l'échelle du temps à chaque période de cadencement (Tₒ) d'au moins une période du réseau en direction du flanc descendant le plus proche d'un autre paquet d'oscillations (2, 3) aussi longtemps que n'est pas remplie l'une au moins des deux conditions suivantes:
- la poursuite de l'opération de décalage aurait pour conséquence l'augmentation de la valeur de l'intensité efficace globale (I_{N}) de l'ensemble des régulateurs de puissance au cours d'une période de cadencement (T₀), ou
- le flanc ascendant du paquet d'oscillations (3, 4) qui est décalé apparaît au même moment que le flanc descendant de l'autre paquet d'oscillations (2, 3).

2. Procédé suivant la revendication 1,
caractérisé en ce que
le flanc ascendant est décalé pas à pas, sur l'échelle du temps, d'une période du réseau à chaque période de cadencement (Tₒ).

3. Circuit pour la réalisation du procédé suivant l'une ou l'autre des revendications 1 ou 2,
caractérisé en ce qu'un
premier transformateur de courant (4) est connecté dans le circuit secondaire en série avec chaque régulateur de puissance à une première résistance ohmique (R_{B}), en ce que chaque régulateur de puissance est commandé par un micro-ordinateur (St), en ce qu'un courant d'une intensité proportionnelle à celle de l'intensité globale de l'ensemble des régulateurs est dévié par une deuxième résistance ohmique (R_{BΣ}) et en ce que les tensions présentes aux deux résistances (R_{B}, R_{BΣ}) sont relevées par le micro-ordinateur (St) (Fig. 3).

4. Circuit suivant la revendication 3,
caractérisé en ce que
la deuxième résistance ohmique (R_{BΣ}) se trouve dans le circuit secondaire d'un deuxième transformateur de courant (5,7) (Fig. 3, Fig. 4).

5. Circuit suivant la revendication 4,
caractérisé en ce que
le deuxième transformateur de courant (7) est parcouru côté primaire par le courant global des régulateurs de puissance connectés en parallèle (Fig. 4).

6. Circuit suivant la revendication 3,
caractérisé en ce que
le deuxième transformateur de courant (5) est doté d'un enroulement primaire pour chaque régulateur, tous ces enroulements primaires étant bobinés dans le même sens, en ce que le courant circulant dans les enroulements primaires est proportionnel, à un facteur près, à celui circulant dans chacun des régulateurs de puissance et en ce que ce facteur est identique pour tous les régulateurs de puissance (Fig. 3).

7. Circuit suivant la revendication 6,
caractérisé en ce que
les enroulements primaires du deuxième transformateur de courant (5) sont connectés en série à l'enroulement secondaire des premiers transformateurs de courant (4) correspondants (Fig. 3).

8. Circuit suivant la revendication 3,
caractérisé en ce que
chaque régulateur de puissance fournit pendant la durée des paquets d'oscillations via une borne (8) un courant d'une intensité proportionnelle à l'intensité efficace du courant de charge passant à ce moment et en ce que toutes les bornes (8) des régulateurs de puissance sont connectées à la deuxième résistance ohmique (R_{BΣ}) (Fig. 5).
